# EUROPÄISCHE PATENTSCHRIFT

(11) **EP 2 404 512 B1**
(45) Veröffentlichungstag und Bekanntmachung des Hinweises auf die Patenterteilung: **06.04.2016**
(21) Anmeldenummer: 11005441.8
(22) Anmeldetag: 04.07.2011
(51) Int. Cl.: A24C 5/34, G01N 22/00

(54) **Vorrichtung zur Herstellung von Zigaretten in der tabakverarbeitenden Industrie**
Device for producing cigarettes in the tobacco processing industry
Dispositif de fabrication de cigarettes dans l'industrie de traitement du tabac

(30) Priorität: 06.07.2010 DE 102010026178
(43) Veröffentlichungstag der Anmeldung: 11.01.2012
(73) Patentinhaber: TEWS Elektronik GmbH & Co. KG, 22459 Hamburg (DE)
(72) Erfinder: Schlemm, Udo, 22607 Hamburg (DE); Herrmann, Rainer, 20253 Hamburg (DE)
(74) Vertreter: Hauck Patentanwaltspartnerschaft mbB

(56) Entgegenhaltungen:
- EP-A1- 1 321 049
- EP-A2- 0 791 823
- WO-A2-2004/057986
- DE-U1-202005 010 375
- US-A- 6 020 969

## Beschreibung

Die vorliegende Erfindung betrifft ein Verfahren zur Herstellung von Zigaretten in der tabakverarbeitenden Industrie.

Aus US 2005/0172977 A1 ist die Herstellung von Rauchwaren mit einem Papier bekannt, das vergleichsweise schwer entflammbare Eigenschaften besitzt. Solche Papiere werden in der Fachsprache als "low ignition propensity (LIP)"-Papiere bezeichnet.

LIP-Papier ist dadurch gekennzeichnet, dass der für den LIP-Effekt verantwortliche Papierstreifen eine Beschichtung aufweist, die dem Papier schwer entflammbare Eigenschaften verleihen. Wie beispielsweise aus WO 2009/157720 A2 bekannt, besitzen diese Streifen eine Breite von 5mm und umschließen die Zigarette vollständig. Zur Herstellung solcher Rauchwaren beschreibt die eingangs genannte Anmeldung US 2005/0172977 A1, dass das LIP-Papier von einer Rolle abgewickelt und einer tabakverarbeitenden Einheit der Zigarettenmaschine zugeführt wird. Um die Geschwindigkeit der Zuführung sowie die Geschwindigkeit beim Zerschneiden des fertigen Zigarettenstrangs in einzelne Zigaretten entsprechend den LIP-Streifen in dem Zigarettenpapier vornehmen zu können, ist das LIP-Papier mit Synchronisierungsmarken versehen. Ein Markierungssensor arbeitet auf optischer Basis und erkennt die Synchronisierungsmarken auf dem zugeführten Papier und erzeugt entsprechende Synchronisierungssignale, die die Geschwindigkeit der nachfolgenden Bearbeitungsschritte steuern, sodass die LIP-Streifen des Papiers in der gewünschten Position auf der Zigarette auftreten. Ferner ist aus US 2005/0172977 bekannt, LIP-Streifen selbst als Synchronisierungsmarken zu verwenden und diese optisch zu erfassen, um so Synchronisierungssignale für die Herstellung des Zigarettenstreifens zu erzeugen. Nachteilig an der optischen

Erkennung der LIP-Streifen ist, dass diese konstrastschwach ausgebildet sein können und daher nicht mit einer ausreichenden Zuverlässigkeit optisch erkannt werden.

Aus US 2009/0301506 A1 ist ein Verfahren zur Herstellung eines LIP-Zigarettenpapiers bekannt. Die LIP-Streifen werden als Beschichtung auf das Zigarettenpapier aufgebracht.

Aus WO 2009/027831 A2 ist ein Zigarettenpapier bekannt, das ein wellenförmig umlaufendes LIP-Band besitzt. Für die Wellenmuster werden verschiedene Formen vorgeschlagen.

Aus US 2009/0025742 A1 ist ein LIP-Zigarettenpapier bekannt, bei dem die LIP-Beschichtung aus einem Natrium-Alginat besteht, das als eine wässrige Lösung aufgetragen wird.

Aus WO 2008/146170 A2 sind LIP-Streifen für Zigarettenpapier bekannt, die eine Wellenform besitzt.

Aus EP 1 449 447 A1 ist eine Zigarette bekannt, die in einem zentralen Kernbereich eine größere Tabakdichte als in einem den Kernbereich umschließenden Mantelbereich aufweist.

Aus WO 02/43513 A1 ist eine Zigarette mit LIP-Eigenschaften bekannt, bei der durch Zellulosezusatz die Glut der Zigarette in ihrem Durchmesser reduziert wird, sodass die Zigarette selbst erlischt.

Aus US 6,645,605 B2 ist ein Material für eine Zigarette mit LIP-Eigenschaften bekannt, bei der durch ein thermoplastisches Polymer eine Beschichtung auf dem Zigarettenpapier aufgebracht ist.

Aus EP 2 177 118 A1 ist ein Verfahren zur Bearbeitung eines LIP-Streifens bekannt, bei dem positionsgenau Material des LIP-Streifens zur Verbesserung der Klebeeigenschaften abgetragen wird.

Aus WO 2004/057986 A2 sind Materialien, Ausrüstungen und Verfahren zur Herstellung von Zigaretten bekannt. Die bekannte Zigarettenmaschine besitzt eine Papierzuführeinheit, bei der die Position von kontinuierlich zugeführtem Zigarettenpapier überwacht wird.

Der Erfindung liegt die Aufgabe zugrunde, ein Verfahren zur Herstellung von Zigaretten bereitzustellen, das in einfacher Weise erlaubt, eine LIP-Struktur auf dem zugeführten Zigarettenpapier online/inline während des Herstellungsprozesses zuverlässig zu erfassen und zu prüfen.

Erfindungsgemäß wird die Aufgabe durch ein Verfahren mit den Merkmalen aus Anspruch 1 gelöst. Gegenstand der Unteransprüche bilden bevorzugte Ausgestaltungen der Erfindung.

Aus DE 20 2005 010 375 ist eine Vorrichtung zur Detektieren und Aussondern von fehlerhaften Zigaretten bekannt. Hier wird in einem Generator und einer Auswertungsschaltung für hochfrequente, elektromagnetische Felder ein Sensor betrieben, der auf eine Stirnfläche der Zigaretten gerichtet ist, wobei die Auswertung der elektromagnetischen Felder im Hinblick auf eine Änderung beim Vorbeigang der Zigaretten ausgewertet wird.

Erfindungsgemäß ist die Verwendung eines Mikrowellenresonators zur Online-Prüfung von LIP-Streifen in Papier vorgesehen. Das Papier wird einer tabakverarbeitenden Einheit einer Zigarettenmaschine zugeführt. Der erfindungsgemäße Mikrowellenresonator erfasst eine Verschiebung der Resonanzfrequenz und/oder Verbreiterung der Resonanzkurve, um die LIP-Streifen auf dem zugeführten Papier zu detektieren. Der Verwendung eines Mikrowellenresonators liegt die Erkenntnis zugrunde, dass bei der Verarbeitung von Zigarettenpapier mit LIP-Streifen, eine Erfassung der dielektrischen Eigenschaften durch den Mikrowellenresonator einer optischen Erfassung der LIP-Streifen weit überlegen und insbesondere auch für die hohen technischen Anforderungen an einer Zigarettenmaschine geeignet ist.

Bei einer bevorzugten Ausgestaltung der Erfindung wird ein Abstand zwischen zwei benachbarten LIP-Streifen erfasst und mit einem vorbestimmten Maximalabstand und/oder Minimalabstand verglichen. Überschreitet der erfasste Abstand den Maximalabstand, so wird ein Warnsignal generiert. Ebenso bei Unterschreiten des Minimalabstandes. Das Warnsignal zeigt der tabakverarbeitenden Einheit in der Zigarettenmaschine an, dass die LIP-Streifen einen zu großen Abstand besitzen, sodass vorbestimmte Abstände der LIP-Streifen nicht ohne Weiteres eingehalten werden können.

In einer weiteren zweckmäßigen Ausgestaltung werden aus den fortlaufend erfassten Signalen der LIP-Streifen Synchronisationssignale für die Papierzuführeinheit erzeugt. Die Synchronisationssignale erlauben der tabakverarbeitenden Einheit die Zuführung des LIP-Papierbandes synchron zur Herstellung des Zigarettenstranges und dem Zerschneiden durchzuführen.

In einer ebenfalls bevorzugten Verwendung führt die Papierzuführeinheit das LIP-Papier anhand der Synchronisationssignale der tabakverarbeitenden Einheit positionsgenau zu. Auf diese Weise kann sichergestellt werden, dass in der verarbeiteten Zigarette die LIP-Streifen in der vorbestimmten Position vorgesehen sind.

Erfindungsgemäß ist ebenfalls vorgesehen, das LIP-Papier der Zuführeinheit anhand der Synchronisationssignale einer weiteren positionsgenauen Bearbeitung zu unterziehen.

Bei der erfindungsgemäßen Verwendung eines Mikrowellenresonators zur Erfassung der LIP-Streifen in dem Zigarettenpapier kann ebenfalls eine Masse oder eine Masse pro Fläche für jeden der LIP-Streifen ermittelt werden und ein Warnsignal generiert werden, wenn die ermittelte Masse bzw. Masse pro Fläche für den LIP-Streifen vorbestimmte Massenwerte über- und/oder unterschreitet.

In einer bevorzugten Ausgestaltung ist für die Verwendung des Mikrowellenresonators ein kleinbauender Planarsensor vorgesehen, der eine Feldverteilung besitzt, die kleiner oder gleich der Breite eines LIP-Streifens ist. Alternativ kann auch ein zylindrischer oder recheckiger Hohlraumresonator oder alternativ ein Koaxialresonator als Mikrowellenresonator verwendet werden, dessen Feldverteilung kleiner oder gleich der Breite des LIP-Streifens ist.

Die Erfindung wird mit der Verwendung an einer Vorrichtung zur Herstellung von Zigaretten in der tabakverarbeitenden Industrie eingesetzt. Eine solche Vorrichtung besitzt eine tabakverarbeitende Einheit und eine Papierzuführeinheit. Die Papierzuführeinheit führt ein mit LIP-Streifen versehenes Papier der tabakverarbeitenden Einheit zu. Wenn nachfolgend von LIP-Streifen gesprochen wird, so ist damit jegliche Struktur auf dem Zigarettenpapier gemeint, die diesem mindestens bereichsweise LIP-Eigenschaften verleiht. Die Messeinrichtung der Papierzuführeinheit erfasst fortlaufend die LIP-Streifen des zugeführten Zigarettenpapiers. Erfindungsgemäß verwendet die Messeinrichtung einen Mikrowellenresonator, durch dessen Messbereich das Papier mit dem LIP-Streifen verläuft und der eine Verschiebung der Resonanzkurve und/oder eine Verbreiterung der Resonanzkurve erfasst.

Aus dem fortlaufend erfassten Messwerten können online/inline die LIP-Streifen geprüft werden, um so deren Qualität sicher zu stellen.

Die Verwendung von Mikrowellenresonatoren in der tabakverabeitenden Industrie ist per se bekannt. Solche Mikrowellenresonatoren werden in der tabakverarbeitenden Einheit der Zigarettenmaschine dafür eingesetzt, den Massegehalt oder die Feuchte der Zigarette festzustellen. Hierzu werden in an sich bekannter Weise stets Verschiebungen der Resonanzfrequenz und eine Verbreiterung der Resonanzkurve erfasst und ausgewertet. Bei der erfindungsgemäßen Vorrichtung wird ein Mikrowellenresonator in der papierzuführenden Einheit verwendet. Auch werden seine Signale nicht in üblicher Weise ausgewertet, indem beispielsweise der Quotient bei der Verschiebung der Resonanzfrequenz und der Verbreiterung der Resonanzfrequenz betrachtet wird. Der Erfindung liegt die Erkenntnis zugrunde, dass bei der Verwendung von LIP-Streifen in Zigarettenpapier sich stets die dielektrischen Eigenschaften des Zigarettenpapiers in messbarer Weise verändern. Diese Erkenntnis ist unabhängig von dem konkret verwendeten Material für den LIP-Streifen. Erfindungsgemäß werden die Signale des Mikrowellenresonators zur Erfassung der LIP-Streifen in der Zigarettenmaschine nicht in der üblichen Weise ausgewertet, bei der die Verschiebung der Resonanzfrequenz und die Verbreiterung der Resonanzkurve ins Verhältnis gesetzt wird, sondern die Verschiebung der Resonanzfrequenz wird unabhängig von einer Verbreiterung der Resonanzkurve oder umgekehrt ausgewertet. Diese Auswertung erlaubt dem Mikrowellenresonator eine sehr zuverlässige Erfassung der LIP-Streifen mit hoher Geschwindigkeit in der Zigarettenmaschine.

Erfindungsgemäß ermittelt die Messeinrichtung aus den fortlaufend erfassten Signalen den Abstand zwischen benachbarten LIP-Streifen und erzeugt ein Warnsignal, wenn der erfasste Abstand einen ersten vorbestimmten Abstandswert überschreitet oder einen zweiten vorbestimmten Abstandswert unterschreitet. Bei dieser Ausgestaltung der Messeinrichtung wird überprüft, ob das LIP-Papier intakt ist und ob die LIP-Streifen vollständig und im richtigen Abstand auf das Papier aufgebracht wurden. Ein Fehler in dem LIP-Papier, beispielsweise durch einen fehlenden LIP-Streifen wird so erkannt und die entsprechende Zigarette kann nachfolgend aussortiert werden.

In einer weiteren bevorzugten Ausgestaltung erzeugt die Messeinrichtung aus den fortlaufend erfassten Signalen Synchronisationssignale für die tabakverarbeitende Einheit. Die tabakverarbeitende Einheit kann mit Hilfe dieser Synchronisationssignale die richtige Zuführung des LIP-Papiers entsprechend der Position des Stranges und des Messers steuern, um sicherzustellen, dass die LIP-Streifen sich in vorbestimmten Positionen auf der Zigarette befinden.

In einer weiteren bevorzugten Ausgestaltung führt die Papierzuführeinheit das LIP-Papier der tabakverarbeitenden Einheit positionsgenau zu. Die positionsgenaue Zuführung stellt sicher, dass bei einer späteren Verarbeitung des LIP-Papiers zu einer Zigarette, die LIP-Streifen sich in den definierten Positionen befinden.

In einer weiteren zweckmäßigen Ausgestaltung kann die Papierzuführeinheit das LIP-Papier anhand der Synchronisationssignale einer weiteren positionsgenauen Bearbeitung unterziehen. Aus der eingangs angesprochenen EP 2 177 118 A1 ist beispielsweise bekannt, ein LIP-Papier mit einem Laserstrahl zu behandeln, um in vorbestimmten Bereichen der Zigarette ein besseres Klebeverhalten zu erzielen. Eine solche Bearbeitung des LIP-Papiers setzt die genaue Kenntnis darüber voraus, in welcher Position die LIP-Streifen sich befinden.

In einer weiteren bevorzugten Ausgestaltung kann die Messeinrichtung aus den fortlaufend erfassten Signalen eine Masse oder eine Masse pro Fläche für jeden der LIP-Streifen ermitteln und ein Warnsignal generieren, wenn die ermittelte Masse bzw. Masse pro Fläche für den LIP-Streifen einen ersten vorbestimmten Massewert unterschreitet und/oder einen zweiten vorbestimmten Massewert überschreitet. Auf diese Weise kann bei dem LIP-Papier nicht nur der Abstand zwischen den LIP-Streifen überprüft werden, sondern alternativ oder zusätzlich kann auch eine Masse der LIP-Streifen geprüft werden, so dass eine umfassende Qualitätskontrolle des verarbeiteten LIP-Papiers möglich ist.

In einer bevorzugten Ausgestaltung ist der Mikrowellenresonator als Planarsensor ausgebildet, dessen Messbereich sich durch das Papier erstreckt. Bevorzugt handelt es sich um einen kleinbauenden Planarsensor, der auf der der LIP-Struktur abgewandten Seite des Papiers angeordnet ist und dessen Messfeld durch das Papier hindurch die LIP-Struktur erfasst. Der kleinbauende Planarsensor ist ein am Ende offener, mit einer Keramikschicht abgedeckter Lamda-Viertel-Resonator, dessen Öffnungsbereich sehr klein ausgeformt werden kann und dessen geometrische Abmessungen den Messfeldbereich definieren. Dadurch kann erreicht werden, dass seine Ortsauflösung kleiner oder gleich der Breite des LIP-Streifens ist, der sich durch das Messfeld bewegt.

Bei einer weiteren zweckmäßigen Ausgestaltung ist als Mikrowellenresonator ein Hohlraumresonator vorgesehen, dessen Messbereich sich in einem zylindrischen oder rechteckigen Hohlraum befindet. Boden und Deckel des zylindrischen oder rechteckigen Hohlraumes sind dabei so eng benachbart angeordnet, dass bei Anbringung eines Schlitzes eine Ortsauflösung erreicht werden kann, die kleiner (gleich) der LIP-Streifenbreite ist - vorausgesetzt der Resonator wird im Grundmodus betrieben. Das zu messende Zigarettenpapier wird mit seinen LIP-Streifen durch das Messfeld in dem Hohlraum geführt.

Bei einer weiteren zweckmäßigen Ausgestaltung ist der Mikrowellenresonator ein Gap-Sensor. Der Gap-Sensor ist ein seitlich geschlitzter Koaxialresonator, der auch halbseitig geöffnet sein kann, durch dessen Öffnungsschlitz das LIP-Papierband hindurchgeführt werden kann. Da der Durchmesser des Koaxialsensors keinen wesentlichen Einfluss auf die Messfrequenz hat (nur die Länge), kann man den Bereich der Feldkonzentration so klein dimensionieren, dass das durchlaufende Band mit einer Ortsauflösung, die kleiner oder gleich der LIP-Streifenbreite ist, gemessen werden kann.

Die Erfindung wird nachfolgend anhand der Figuren näher erläutert. Es zeigt:
- Fig. 1: eine schematische Ansicht eines Teils der Zigarettenmaschine mit Papierzuführung und Tabakverarbeitung,
- Fig. 2: eine schematische Ansicht eines Mikrowellenhohl-raumresonators zur Erfassung von LIP-Streifen,
- Fig. 3: einen Mini-Planarsensor in einer schematischen Ansicht mit seinem Messfeld zur Erfassung von LIP-Streifen,
- Fig. 4: die in einem Hohlraumresonator beispielhaft gewonnenen Messwerte für ein LIP-Zigarettenpapier und
- Fig. 5: die mit einem Planarsensor beispielhaft aufgezeichneten Messwerte für einen Planarsensor.

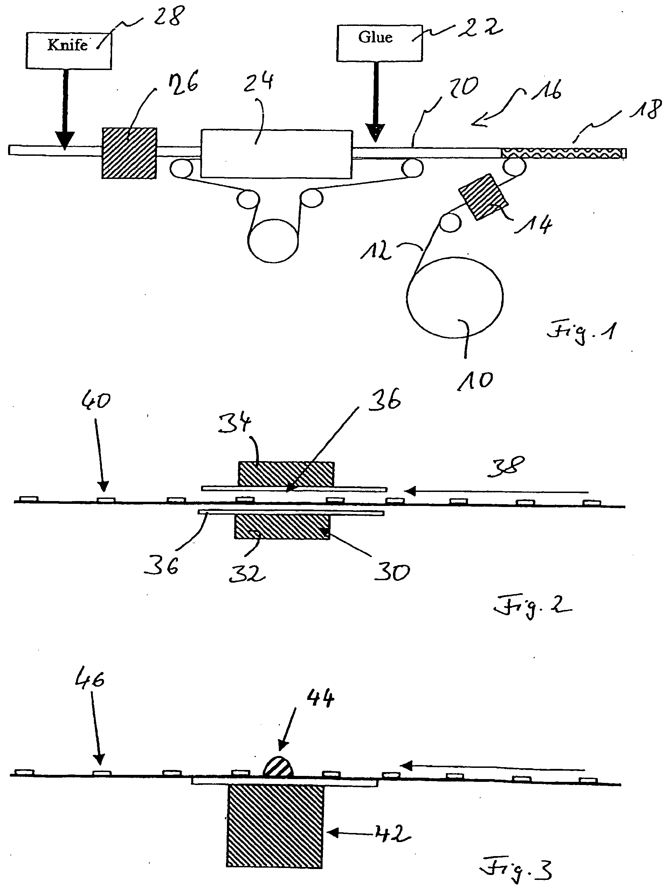

Figur 1 zeigt in einer stark vereinfachten Ansicht eine Zigarettenmaschine, der von einer Bobine 10 Zigarettenpapier 12 zugeführt wird. Das Zigarettenpapier 12 läuft durch die Messeinrichtung 14 und gelangt so in den tabakverarbeitenden Teil 16 der Zigarettenmaschine. Entsprechend vorbereiteter Tabak 18 wird mit dem Zigarettenpapier 12 zu einem Zigarettenstrang 20 verbunden, der eine Klebeeinheit 22 durchläuft. Der so gewonnene Zigarettenstrang wird durch eine Wärmeeinheit 24 geführt, wobei in 26 das Masseprofil der Zigarette untersucht wird. Nachfolgend wird der so bearbeitete Zigarettenstrang durch Messer 28 in einzelne Zigaretten zerschnitten.

Die Messeinrichtung 14 für das zugeführte Zigarettenpapier kann wie in Figur 2 dargestellt aus einem Hohlraumresonator bestehen. Der Hohlraumresonator 30 besteht aus einem oberen Gehäuseteil 33 und einem unteren Gehäuseteil 34. Zwischen Gehäuseteil 32 und 34 ist der Hohlraum gebildet, in dem die zu vermessende Resonanz erzeugt wird. Beim Hohlraumresonator können oberer und unterer Resonanzteile 32 und 34 separat ausgebildet sein, bevorzugt sind diese jedoch einstückig oder fest miteinander verbunden und das Zigarettenpapier wird durch einen entsprechenden Schlitz in der Wandung durch den Resonatorhohlraum geführt. Der Schlitz kann zur besseren Papiereinfädelung auch zu einer seitlichen Öffnung des Hohlraumresonators ausgebildet werden. Zur Abschirmung gegenüber unerwünschten Streufeldern ist der Hohlraum durch Abdeckplatten 36 abgeschirmt, die an jedem Teil des Resonators die Ausbildung von Streufeldern außerhalb des Resonatorhohlraums verhindern. Das Zigarettenpapier wird in Richtung 38 dem Hohlraumresonator zugeführt. Die LIP-Streifen 40 sind in Figur 2 schematisch als erhabene Streifen dargestellt. Dies ist aber keineswegs notwendig, da auch LIP-Streifen existieren, die in das Zigarettenpapier eingelassen sind und nicht vorstehen.

Da der Mikrowellenresonator 30 die dielektrischen Eigenschaften der LIP-Streifen erfasst, ist es unerheblich, ob die LIP-Streifen optisch gut erkennbar sind oder erhaben aus dem Zigarettenpapier hervorstehen.

Figur 3 zeigt die Messeinrichtung 14 aus Figur 1 in Ausgestaltungen mit einem Mini-Planarsensor 42 als ein Beispiel für einen kleinbauenden Planarsensor. Der Mini-Planarsensor 42 ist auf einer Seite des Zigarettenpapiers angeordnet und besitzt ein Messfeld 44, das aus dem Mini-Planarsensor 42 hervorsteht. Das Messfeld 44 erfasst dielektrische Veränderungen durch die eintretenden LIP-Streifen 46. Über Mini-Planarsensoren werden dann die veränderten dielektrischen Eigenschaften, die zu einer Verschiebung der Resonanzfrequenz-Differenz und zu einer Verbreiterung der Resonanzkurve führen, ausgewertet.

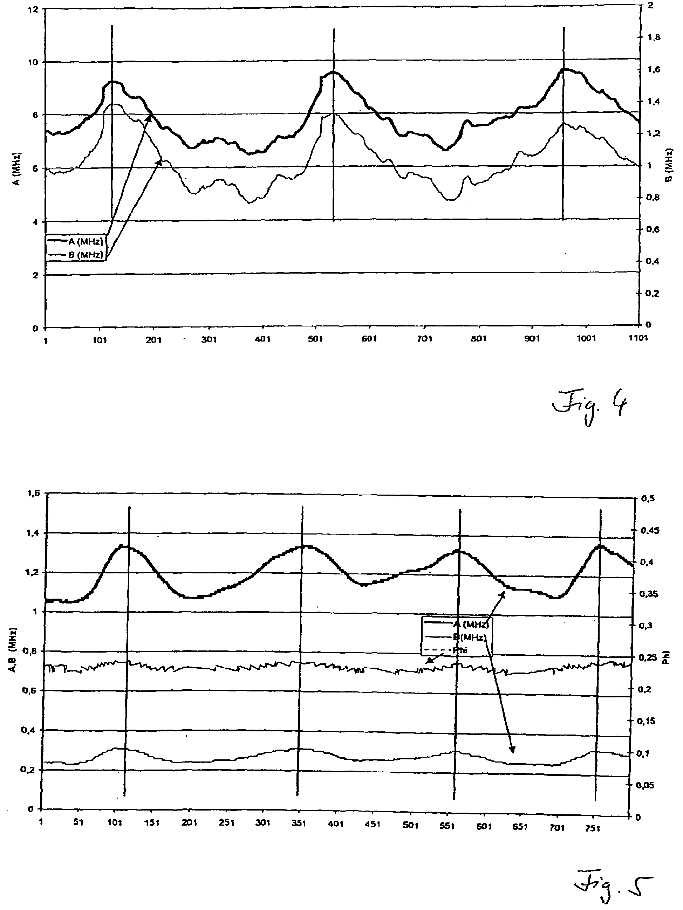

Figur 4 zeigt beispielhaft die Veränderung der Resonanzfrequenz mit der Zeit, wenn das Zigarettenpapier mit LIP-Streifen durch den Hohlraumresonator geführt wird. In Figur 4 ist dann die Veränderung der Resonanzfrequenz (Messkurve A) deutlich an einer periodischen Struktur mit Maxima und Minima zu erkennen. In den Maxima liegt jeweils ein LIP-Streifen in dem Messbereich vor. Der LIP-Streifen kann auch alternativ oder zusätzlich durch die sogenannten B-Werte erfasst werden. Die B-Werte ergeben sich aus der Verbreiterung der Resonanzkurve. Die B-Werte sind als Messkurve B eingetragen. Deutlich zu erkennen ist wieder, dass diese Kurve dieselbe periodische Struktur zeigt, wie die A-Kurve. Es kann also die Auswertung der A-Kurve oder durch die Auswertung der B-Kurve sehr genau bestimmt werden, in welchem Abstand die LIP-Streifen vorliegen. Selbstverständlich ist es auch möglich, zur Verringerung von Messfehlem beide Kurven auszuwerten. Ebenso kann anhand der Maxima der A-Kurve und/oder der B-Kurve auch die Position der LIP-Streifen ermittelt werden. Auch die Masse der LIP-Streifen kann durch die A-Kurve und/oder B-Kurve ermittelt, in dem auf gemessene Werte in Differenz zu Leermessungen und/oder den in den Zwischenräumen zwischen den LIP-STriefen gemessenen Wert abgestellt wird. Andererseits kann durch gleichzeitige Auswertung der A- und der B-Kurve die Flächenmasse des aufgetragenen LIP-Streifens bestimmt werden.

Figur 5 zeigt die entsprechenden Signale, die von einem Mini-Planarsensor aufgezeichnet wurden, dennoch ist wieder in der A-Kurve und in der B-Kurve die periodische Struktur der LIP-Streifen zu erkennen. Ebenfalls eingezeichnet ist die Phi-Kurve, die sich als Quotient von A und B berechnet. Wie in Figur 5 zu erkennen, besitzt die Phi-Kurve keine eindeutige Wellenstruktur.

## Patentansprüche

1. Verwendung eines Mikrowellenresonators zur Onlineprüfung von LIP-Streifen in Papier, das einer tabakverarbeitenden Einheit einer Zigarettenmaschine zugeführt wird, wobei von dem Mikrowellenresonator eine Verschiebung der Resonanzfrequenz oder eine Verbreiterung der Resonanzkurve erfasst wird, um einen LIP-Streifen zu erfassen, wobei ein Abstand zwischen zwei benachbarten LIP-Streifen mit einem vorbestimmten Abstandswert verglichen und bei einem Überschreiten eines Maximalabstands oder Unterschreiten eines Minimalabstandes ein Warnsignal generiert wird.

2. Verwendung eines Mikrowellenresonators zur Onlineprüfung von LIP-Streifen in Papier, das einer tabakverarbeitenden Einheit einer Zigarettenmaschine zugeführt wird, wobei von dem Mikrowellenresonator eine Verschiebung der Resonanzfrequenz und eine Verbreiterung der Resonanzkurve erfasst und die Verschiebung der Resonanzfrequenz und die Verbreiterung der Resonanzkurzve unabhängig voneinander ausgewertet werden, um einen LIP-Streifen zu erfassen, wobei ein Abstand zwischen zwei benachbarten LIP-Streifen mit einem vorbestimmten Abstandswert verglichen und bei einem Überschreiten eines Maximalabstands oder Unterschreiten eines Minimalabstandes ein Warnsignal generiert wird.

3. Verwendung nach einem der vorstehenden Ansprüche, **dadurch gekennzeichnet, dass** aus den fortlaufend erfassten Signalen der LIP-Streifen Synchronisationssignale für eine Papierzuführeinheit erzeugt werden.

4. Verwendung nach Anspruch 3, **dadurch gekennzeichnet, dass** die Papierzuführeinheit das LIP-Papier anhand der Synchronisationssignale der tabakverarbeitenden Einheit positionsgenau zuführt.

5. Verwendung nach Anspruch 3 oder 4, **dadurch gekennzeichnet, dass** die Papierzuführeinheit das LIP-Papier anhand der Synchronisationssignale einer weiteren positionsgenauen Bearbeitung unterzieht.

6. Verwendung nach einem der Ansprüche 1 bis 5, **dadurch gekennzeichnet, dass** eine Masse oder eine Masse pro Fläche für jeden der LIP-Streifen ermittelt und ein Warnsignal generiert wird, wenn die ermittelte Masse bzw. Masse pro Fläche für den LIP-Streifen einen vorbestimmten ersten Massewert überschreitet oder einen vorbestimmten zweiten Massewert unterschreitet.

7. Verwendung nach einem der Ansprüche 1 bis 6, **dadurch gekennzeichnet, dass** ein Planarresonator, ein Hohlraumresonator oder ein Koaxial-Resonator als Mikrowellenresonator vorgesehen ist.

## Claims

1. A use of a microwave resonator for the online testing of LIP strips in paper, which is fed to a tobacco processing unit of a cigarette machine, wherein a shift in the resonance frequency or a broadening of the resonance curve is detected by the microwave resonator, in order to detect an LIP strip, wherein a distance between two neighboring LIP strips is compared with a predetermined distance value and a warning signal is generated when a maximum distance is exceeded or a minimum distance is fallen short of.

2. The use of a microwave resonator for the online testing of LIP strips in paper, which is fed to a tobacco processing unit of a cigarette machine, wherein a shift in the resonance frequency and an broadening of the resonance curve is detected by the microwave resonator and the shift in the resonance frequency and the broadening of the resonance curve are evaluated independently of each other in order to detect an LIP strip, wherein a distance between two neighboring LIP strips is compared with a predetermined distance value and a warning signal is generated when a maximum distance is exceeded or a minimum distance is fallen short of.

3. The use according to one of the preceding claims, **characterized in that** synchronization signals are generated for a paper feed unit from the continuously detected signals of the LIP strips.

4. The use according to claim 3, **characterized in that** the paper feed unit feeds the LIP paper to the tobacco processing unit true to position based on the synchronization signals.

5. The use according to claim 3 or 4 , **characterized in that** the paper feed unit subjects the LIP paper to a further precisely positioned processing based on the synchronization signals.

6. The use according to one of claims 1 to 5, **characterized in that** a mass or a mass per surface area is determined for each of the LIP strips and a warning signal is generated when the determined mass or respectively mass per surface area for the LIP strip exceeds a predetermined first mass value or a predetermined second mass value is fallen short of.

7. The use according to one of claims 1 to 6, **characterized in that** a planar resonator, a hollow space resonator or a coaxial resonator is provided as the microwave resonator.

## Revendications

1. Utilisation d'un résonateur à microondes pour la vérification en ligne de bandes LIP dans du papier alimenté vers une unité de traitement du tabac d'une machine à cigarettes, le résonateur à microondes détectant un décalage de la fréquence de résonance ou un élargissement de la courbe de résonance, afin de détecter une bande LIP, un écart entre deux bandes LIP voisines étant comparé avec une valeur d'écart prédéterminée, et un signal d'alerte étant généré lors d'un dépassement d'un écart maximal ou du passage en dessous d'un écart minimal.

2. Utilisation d'un résonateur à microondes pour la vérification en ligne de bandes LIP dans du papier alimenté vers une unité de traitement du tabac d'une machine à cigarettes, le résonateur à microondes détectant un décalage de la fréquence de résonance et un élargissement de la courbe de résonance, et le décalage de la fréquence de résonance et l'élargissement de la courbe de résonance étant évalués indépendamment l'un de l'autre, afin de détecter une bande LIP, un écart entre deux bandes LIP voisines étant comparé avec une valeur d'écart prédéterminée, et un signal d'alerte étant généré lors d'un dépassement d'un écart maximal ou du passage en dessous d'un écart minimal.

3. Utilisation selon l'une des revendications précédentes, **caractérisé en ce que** des signaux de synchronisation sont produits pour une unité d'alimentation en papier à partir des signaux des bandes LIP détectés en continu.

4. Utilisation selon la revendication 3, **caractérisé en ce que** l'unité d'alimentation en papier alimente le papier LIP en position exacte à l'aide des signaux de synchronisation de l'unité de traitement du tabac.

5. Utilisation selon la revendication 3 ou 4, **caractérisé en ce que** l'unité d'alimentation en papier soumet le papier LIP à un traitement supplémentaire en position exacte à l'aide des signaux de synchronisation.

6. Utilisation selon l'une des revendications 1 à 5, **caractérisé en ce qu'**une masse ou une masse surfacique est déterminée pour chaque bande LIP, et un signal d'alerte est généré lorsque la masse ou la masse par aire pour chaque bande LIP dépasse une première valeur de masse prédéterminée ou passe en dessous d'une deuxième valeur de masse prédéterminée.

7. Utilisation selon l'une des revendications 1 à 6, **caractérisé en ce qu'**il est prévu un résonateur planaire, un résonateur de cavité ou un résonateur coaxial en tant que résonateur à microondes.
